# EUROPEAN PATENT APPLICATION

(11) **EP 1 264 762 A1**
(43) Date of publication of application: **11.12.2002**
(21) Application number: 02380050.1
(22) Date of filing: 04.03.2002
(51) Int. Cl.: B62K 3/00

(54) **Recumbent bicycle**

(30) Priority: 08.06.2001 ES 200101336
(71) Applicant: Estelrich, Jaime Aloy, 07300 Inca (ES)
(72) Inventor: Estelrich, Jaime Aloy, 07300 Inca (ES)
(74) Representative: Marques Alos, Fernando

(57) **Abstract**

The invention relates to a recumbent bicycle, of the type used for touring or racing, composed of a chassis which is made up of a closed tubular frame (1) supporting the forked stick and a securing (2) element to the rear axle of the bicycle, which are attached to each other. The frame (1), which is supporting the forked stick (4), has an inclined upper crossbar (5) equipped with a means of securing (6) a seat (7) which has an armchair type back. The seat is situated below the head tube (8) which fastens the forked stick (4). This head tube (8) has an approximate inclination of between 40° and 50°. The lower part of the frame (1) which supports the forked stick has a bent crossbar (11), being its lower branch practically horizontal and on its vertex there is a plate with ordinary pedals (12). Both crossbars of the frame, the upper and the lower, are connected with a common tubular element (3) and with the second securing frame (2) of the rear axle, which has a crossbar (13) parallel to the back of the seat (7), acting as a support to it.

## Description

The objective of this invention, as expressed in the statement to this descriptive report, consists of a **"RECUMBENT BICYCLE",** of the type used for touring or racing.

The bicycle is a two-wheeled means of transport assembled on a chassis with saddle, where the rear wheel is the driving wheel, with driving force through some means of transmission, normally chains, which joins it to a plate or sprocket with pedals.

Nowadays, the bicycle is widely used amongst the population, due to the fact it is an economical, ecological and uncomplicated form of transportation, especially useful for short or not very long distances which need to be done within a limited space of time.

The main inconvenient arises when one wishes to cycle for a long period of time, as the method of seating permitted by the saddle does not allow complete or sufficient support to the back, either in the kidney or lumbar area, causing considerable suffering.

Subsequently, the recumbent bicycles were developed, which give sufficient or complete support to the back. The distribution of the framework is in such a way whereby transmission is arranged from over the handlebar, consequently the rider is in a very uncomfortable position, when using the bicycle for touring purposes. The pedalling hub of the recumbent bicycles is practically at the same height, or even higher than the seat, which means feet are in a higher position than the pelvis. This position, while indeed very aerodynamic, may also cause serious stability problems when one must stop frequently, for example in the city or in busy streets or even when taking sharp bends.

These bicycles have only one rod or crossbar connecting the pedalling hub, the steering post, the seat and the rear wheel, thus saving on weight but losing on firmness and inflexibility.

The steering post of these bicycles is practically at the same height as the seat, requiring a very high handlebar or an extension to the steering column.

As the steering post is located in a very low position with regard to the seat, it is indispensable to adjust a very high and rigid handlebar, with hand reach and able to tolerate the strength of the rider when pedalling.

The handlebar, which is sometimes used below the seat, is not only dangerous at a stability level, but also is awkward to manoeuvre on rural or urban settlement.

The front wheel of these recumbent bicycles is generally smaller than the rear wheel, preventing the feet from scrapping it when pedalling.

Usually these are used in competitions or as racing bicycles, due to the development is larger than in the conventional bicycles because of the position of the rider.

As a result, a new device has been developed which solves the problem existing to date.

Basically, the new recumbent bicycle consists of a chassis made up of a tubular frame supporting the forked stick on its frontal part, and a securing element to the rear axle of the bicycle, such as a rod, etc.

The frame which supports the forked stick has an upper, tilted crossbar, equipped with a system of securing the seat, which has an armchair type back rest. The seat is in a lower position than the head tube which fastens the forked stick.

This head tube has an inclination of approximately between 40° to 50°. The forked stick secures the front wheel in a conventional manner, and the bent shaped handle bar emerges from its upper part.

This new arrangement reduces the distance between the handlebar and the saddle. This distance is shorter than in conventional bicycles.

The lower part of the frame which supports the forked stick has a bent crossbar, on which vertex there is a plate with ordinary pedals.

Both crossbars, the higher and the lower, are connected with the security element of the rear axle.

A crossbar parallel to the back of the seat emerges from the central frame or from the security element of the rear axle. This crossbar serves as a support for the back of the seat.

The rear securing element may consist of a closed frame which is made up of a set of one or two crossbars, generally distributed in a "V" shape, secured to the central frame, and remaining joined at the rear axle, where the wheel is secured.

Optionally a bar or a single rod can be used for the exact same function of supporting the axle of the wheel.

This axle has a geared system of plates through a chain to the front sprocket or through a sprocket strip or transmission through cardan.

Finally the recumbent bicycle has the conventional or modern gear and breaking system and, optionally, it can have one or two shock absorbers which may be situated in the rear frame or in front frame, or even in both of them.

This new bicycle has a more comfortable and natural riding position due to the incorporation of the recumbent seat.

As the seat is situated below the head tube which fastens the forked stick, it has a lower centre of gravity, consequently with greater stability, and less hazard in case of a fall.

The position of the rider allows a better weight distribution allowing more safety in adverse conditions.

As the rider is in a leaning back position, the aerodynamic efficiency is increased, reducing the gust caused to riders cycling behind on traditional bicycles.

In speed competitions, there is an added advantage over conventional bicycles, due to the back rest position.

The new recumbent bicycle allows quite a different experience when out of a ride, with regard to existing models, as in these ones, the position of the handlebar is very awkward.

### DESCRIPTION OF THE DRAWINGS

To illustrate everything explained so far, a page of drawings is attached to this descriptive report, forming an integral part of it, representing the invention in a simplified and schematic way. These drawings are intended to be purely illustrative and are not an exhaustive representation of the practical possibilities of the invention.

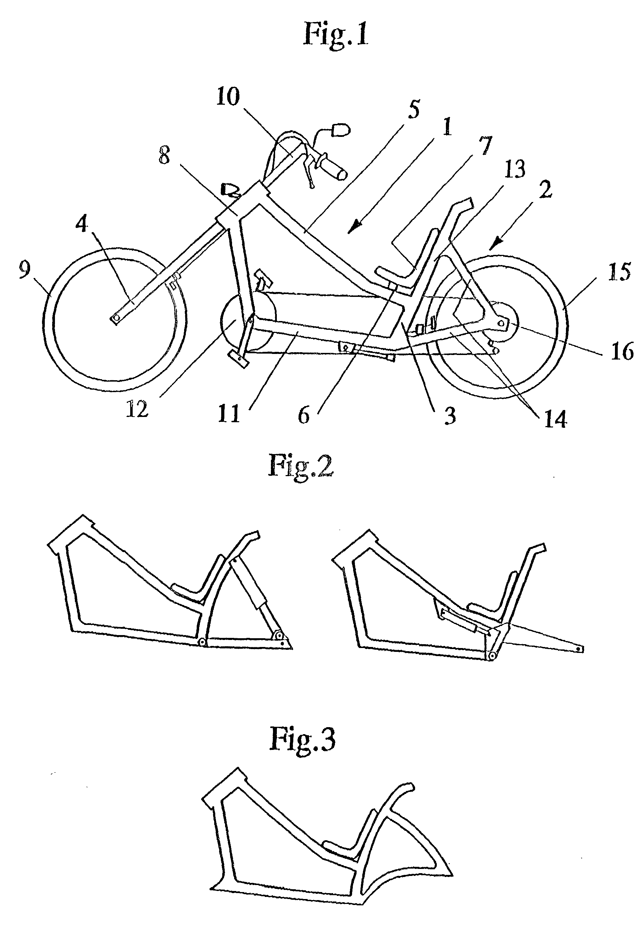

In these drawings, figure 1 represents a general view of the new recumbent bicycle.

Figure 2 shows two recumbent bicycle frames, in which the shock absorber is shown in the front frame and in the rear frame.

Figure 3 corresponds to an original design of the chassis of the bicycle.

### DESCRIPTION OF A PRACTICAL CASE

The new recumbent bicycle is formed from a chassis made up of a closed tubular frame (1), supporting the forked stick and with a securing (2) element to the rear axle of the bicycle, united by a common tubular element (3).

The forked stick (4) support frame (1) has an upper inclined crossbar (5), equipped with a means of securing (6) a seat (7), which has an armchair type back rest. This seat is situated in a lower position than the head tube (8) which fastens the forked stick(4).

This head tube (8) has an inclination of between 40° to 50° approximately. The forked stick (4) secures the front wheel(9) in the conventional way, and the handlebar emerges from the upper part, in a bent shape (10).

The new arrangement allows a shorter distance between the handlebar and the saddle than the one in conventional bicycles.

The lower part of the frame (1), which supports the forked stick, has a bent crossbar (11), with the lower part practically horizontal on which vertex there is a plate with ordinary pedals (12).

Both crossbars, the higher and the lower, are linked through a common tube (3) to the securing element (2) of the rear axle.

This securing element (2) has three crossbars. One crossbar is parallel (13) to the back of the seat, which serves as a support for the seat, and the other two crossbars (14) are incorporated with the rear axle where the rear wheel (15) is secured.

In another practical case, the securing element (2) can have absorbing elements or a single bar attached to the axle, as shown in figure 2.

In this axle a system of plates may be found, geared through a chain to the front sprocket (16), or in its place, through a sprocket strip or transmission through cardan.

Finally the recumbent bicycle has the conventional or modern gear and breaking system and, optionally, it can have one or two shock absorbers which can be situated in the rear frame or in front frame, or even in both of them.

Having established the concept behind the invention, the note of claims is drafted next, thus establishing the inventions that are the subject of the claims.

## Claims

1. A recumbent bicycle, of the type used for touring or racing, consisting in a chassis made up of a closed tubular frame (1), supporting the forked stick and with a securing element (2) to the rear axle of the bicycle, attached to each other; wherein the frame (1) supporting the forked stick (4) presents an upper, inclined crossbar (5) equipped with a means (6) of securing the seat (7), which has an armchair type back rest, which is situated below the head tube (8) that fastens the forked stick (4); such a head tube (8) has an approximate inclination of between 40° to 50°; finally the lower part of the frame (1) which supports the forked stick has a bent crossbar (11) being its lower branch practically horizontal and on its vertex there is a plate with ordinary pedals (12).

2. A recumbent bicycle, as per the preceding claim, wherein both crossbars of the front frame, the upper and lower, are joined by means of a common tubular element (3), to the securing (2) element of the rear axle, where the rear wheel (15) is fitted and has a crossbar parallel (13) to the back of the seat (7), which serves as a support to it.
